# EUROPEAN PATENT APPLICATION

(11) **EP 4 345 057 A1**
(43) Date of publication of application: **03.04.2024**
(21) Application number: 22020464.8
(22) Date of filing: 29.09.2022
(51) Int. Cl.: C01B 3/00

(54) **METHOD AND APPARATUS FOR EVAPORATING LIQUEFIED HYDROGEN**

(71) Applicant: Linde GmbH, 82049 Pullach (DE)
(72) Inventor: Decker, Lutz, 82049 Pullach (DE); Weikl, Markus, 82049 Pullach (DE); Murer, Martin, 82049 Pullach (DE)
(74) Representative: Lu, Jing

(57) **Abstract**

A method for evaporating liquid hydrogen is provided, said method comprising heating said liquid hydrogen at an evaporation pressure level over an temperature range between a first temperature level below the evaporation point of hydrogen at said evaporation pressure level and a second temperature level above the evaporation point of hydrogen at said evaporation pressure level using an vaporizer arrangement (10), wherein at least a part of said hydrogen is contacted with a conversion catalyst promoting conversion from para- to orthohydrogen during said heating at least in a temperature subrange of said temperature range. A corresponding apparatus is also part of the present invention.

## Description

The present invention relates to a method for evaporating liquefied hydrogen including use of a catalyst promoting the conversion of parahydrogen to orthohydrogen and to a corresponding apparatus.

### Background

Because of its unlimited availability as a component of water, its non-polluting nature after combustion, its storage capacity and its transportability in the liquid state, hydrogen is among the carriers of energy having a great potential for expanded use in the future, particularly in "hydrogen economy" scenarios.

The hydrogen molecule consists of two hydrogen atoms, which for their part each consist of one proton and one electron each. The hydrogen molecule, H₂, exists in two modifications, as orthohydrogen and as parahydrogen, which are distinguished by the spin of their atomic nuclei. In the ortho modification, the two nuclear spins are aligned parallel whereas in the para modification the spins are anti-parallel. The two different orientations of the nuclear spin are responsible for different magnetic, optical and thermal properties of the two modifications.

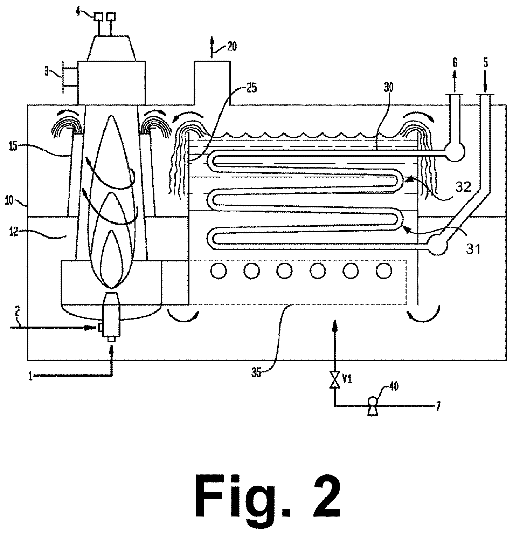

The equilibrium composition between the ortho and para modification is dependent on temperature and changes from about 25% para portion at ambient temperature to nearly 100% para portion at 20K, the boiling point of hydrogen (see also Figure 2 and the corresponding explanations below). The conversion of ortho- to parahydrogen is exothermic and takes place automatically and slowly, i.e., over several days, but can be accelerated with the help of catalysts, e.g., Fe₂O3, Ni/SiO₂, or Ru/Al₂O₃.

Since the heat of transition from ortho to para at the boiling point is about 1.5 times as great as the heat of evaporation, the conversion of ortho- to parahydrogen should be performed during liquefaction already, as the heat being liberated thereby may then be dissipated directly using heat exchangers, thereby avoiding excessive evaporation of the liquefied hydrogen thereafter. A purchaser of liquid hydrogen who would like to intermediately store the hydrogen under certain circumstances for several weeks will therefore require from the supplier a para portion of at least 98%. A high parahydrogen content of the liquid hydrogen minimizes the possibility of the exothermic conversion resulting in evaporation.

On the other hand, during regasification of liquefied hydrogen, a conversion from parato orthohydrogen takes place, until the equilibrium in the gaseous state is reached. This conversion is endothermic and relatively slow, extending over several days. No detrimental effects are therefore observed if the evaporated hydrogen is kept in pipes of non-catalytic material and is readily used.

However, with an increasing use of hydrogen, e.g. as a fuel gas, and particularly with the establishment of a global liquid hydrogen economy, hydrogen will also be used in equipment (for example existing natural gas pipelines made of carbon steel) and processes (for example using directly reduced iron) where catalytic material is present. Moreover, the hydrogen may be stored or transported in gaseous state for a longer time before being used. As further explained below, the endothermicity of the conversion from para- to orthohydrogen can cause negative effects in such cases.

It is therefore an object of the present invention to improve handling of (re)gasified or evaporated hydrogen, particularly in the circumstances mentioned.

### Summary of the invention

In view of the above, the present invention proposes a method for evaporating liquefied hydrogen including use of a catalyst promoting the conversion of parahydrogen to orthohydrogen and a corresponding apparatus comprising the features of the independent claims. Preferred embodiments are the subject of the independent claims and of the description that follows.

As mentioned above, particularly with the establishment of a global liquid hydrogen economy, (re)gasified or evaporated hydrogen will be used in equipment where catalytic material is present and in which said hydrogen may be kept during extended residence times. The endothermic conversion process from para- to orthohydrogen leads to a significant temperature decrease (~ 30 K) of the hydrogen stream in such cases. For example, in natural gas grid this can lead to icing and cooling the pipe material to the point of material failure due to low temperature. This can be equivalent to the cold break through scenario for vaporizers for liquefied natural gas. For direct reduction iron processes, the endothermic conversion leads to a heat sink (-500 kJ/kg H₂) in the reaction furnace.

The present invention overcomes these disadvantages by promoting the conversion from parahydrogen to orthohydrogen using a catalyst in a controlled manner and at efficient temperatures.

A method for evaporating liquid hydrogen is proposed herein, said method comprising heating said liquid hydrogen at an evaporation pressure level over an temperature range between a first temperature level below the evaporation point of hydrogen at said evaporation pressure level and a second temperature level above the evaporation point of hydrogen at said evaporation pressure level using an vaporizer arrangement, wherein at least a part of said hydrogen is contacted with a conversion catalyst promoting conversion from para- to orthohydrogen during said heating at least in a temperature subrange of said temperature range.

The evaporation pressure level may particularly be an elevated pressure level, or, more generally, may be between 1 to 1.000 bar, particularly 50 to 110 bar.

While the conversion from parahydrogen to orthohydrogen takes days, it can be significantly accelerated using catalysts mentioned above. Catalysts are, however, expensive and add to the pressure drop of evaporation systems typically used to evaporate cryogenic gases like liquefied natural gas and liquid nitrogen, which can also be used for the evaporation of liquid hydrogen. Such systems are known from the prior art and include, e.g., submerged combustion vaporizers (SCV), open rack vaporizers (ORV) or intermediate fluid type vaporizers (IFV). Any type of vaporization, however, can be used in embodiment of the present invention.

An embodiment of a submerged combustion vaporizer is illustrated in connection with Figure 2 and the corresponding explanations.

An open rack vaporizer generally uses seawater as its heat source and is typically used for higher flows of cryogenic liquids to be evaporated. The seawater enters the top of the vaporizer and is passed over a plurality of tubes of a tube bundle through which the cryogenic liquid is passed upwards. The benefit of using heat from seawater is that this energy is for free and there is no further carbon dioxide emission generated for regasifying the cryogenic liquid. The seawater is typically collected in a basin at the bottom of the vaporizer tubes before being returned to the sea. Using an open rack vaporizer, a simply and cost-efficient vaporizing process may be realized that is easy to operate and maintain. It is a very safe and particularly reliable technology.

An intermediate fluid type vaporizer is generally characterized by its concept of three heat exchangers and the use of an intermediate fluid. Thanks to the use of an intermediate fluid, the intermediate fluid type vaporizer is not, or to a smaller extent, subject to freezing and has a wider temperature range of the heating medium. Generally, an intermediate fluid type vaporizer comprises three sections. In a first section, an intermediate fluid (shell side) is vaporized by seawater (tube side). In a second section, the cryogenic liquid (tube side) is vaporized by the heat from the condensation of the intermediate fluid (shell side). The intermediate fluid is condensed by the cryogenic liquid on the surface of the tubes and dropped to the bottom of the shell of the second section. In a third section, the evaporated cryogenic liquid (shell side) is (further) heated by seawater (tube side) up to an ambient temperature.

In an embodiment of the present invention, wherein the first temperature level is below 20 K and the second temperature level is above 250 or above 300 K, the subrange in which the catalyst contact is performed is a subrange between 95 K and 200 or 250 K, and in this case said hydrogen or said part thereof being contacted with the conversion catalyst during said heating is contacted with said catalyst in said temperature subrange but not outside said temperature subrange.

This embodiment is based on the finding that the catalytic conversion of parahydrogen to orthohydrogen advantageously takes place at low temperature to use the high temperature difference for adding the heat necessary for the endothermic conversion to keep the needed heat transfer surface low, and that, at the same time, the catalyst should be used at the point with high potential driving the conversion, so the temperature is advantageously chosen such that the parahydrogen orthohydrogen equilibrium is already close to the 25% parahydrogen vs. 75% orthohydrogen equilibrium prevalent at temperatures above 200 K. Liquid hydrogen stored at 20 K is nearly fully converted to parahydrogen. The equilibrium shifts to the ambient temperature equilibrium above 100 K.

Instead of filling the whole heat exchanger with the catalyst or heating the hydrogen to a temperature level of 30 K above the desired temperature and converting the hydrogen downstream of the heat exchanger and therefore losing the temperature in the conversion process, such an embodiment of the present invention suggests incorporating the catalyst only in the a certain region of the heat exchanger, i.e. a region above 95 K. Depending on the residence time in the catalyst section of the heat exchanger the catalyst section can end at the position in the heat exchanger where the hydrogen stream reaches 200 or 250 K. This section may correspond to about the middle third of the tubes in a submerged combustion vaporizer tube bundle. The exact temperature band may be selected on basis of the relative price of the catalyst vs. the price of the heat transfer surface.

As already mentioned, embodiments of the present invention may be used with a variety of vaporizer arrangements. Therefore, said vaporizer arrangement may comprise at least one vaporizer selected from a submerged combustion vaporizer, an open rack vaporizer and an intermediate fluid type vaporizer or a combination of at least two of said vaporizers. However, any other suitable vaporizer technology may be used in connection with embodiments of the present invention.

Furthermore, all catalysts suitable for the conversion mentioned may be used. Therefore, in a method according to an embodiment of the present invention said conversion catalyst may comprise at least one catalyst material selected from Fe₂O3, Ni/Si02, Ru/Al₂O₃, and combinations thereof, or more generally, a catalyst material comprising iron and/or ruthenium or corresponding oxides.

In embodiments of the present invention, the conversion catalyst may be provided such that said conversion from para- to orthohydrogen during said heating results in a parahydrogen content of less than 30% or another value suitable in the evaporated hydrogen. Conversion may particularly be adjusted using at least one of a residence time, a catalyst surface, a catalyst amount, and a catalyst activity.

The present invention is particularly advantageous in the scenarios mentioned at the outset, wherein the evaporated liquid hydrogen is supplied to at least one of a pipeline, a distribution grid and a directly reduced iron process or a combination thereof.

An apparatus for evaporating liquid hydrogen is also part of the present invention, said apparatus comprising a vaporizer arrangement configured to heat said liquid hydrogen at an evaporation pressure level over an temperature range between a first temperature level below the evaporation point of hydrogen at said evaporation pressure level and a second temperature level above the evaporation point of hydrogen at said evaporation pressure level, wherein said vaporizer arrangement is configured to contact at least a part of said hydrogen with a conversion catalyst promoting conversion from para- to orthohydrogen during said heating at least in a temperature subrange of said temperature range.

Particularly, said vaporizer arrangement may comprise heating passages, such as tube bundles or individual tubes of such bundles, (each) having a passage length, wherein at least a part of said passage length is provided with said conversion catalyst.

In such an embodiment, said conversion catalyst may particularly be provided in a subsection of said passage length but not in a remainder thereof. Advantages of corresponding embodiments, including savings in catalyst and a reduction of a pressure drop, were already discussed above.

In an embodiment of the present invention, said subsection may extend from a first position to a second position, said first and second positions being at two sides of a centre of said passage length. In other words, sections at the inlet and outlet of the passages may be kept free from catalyst.

In an embodiment of the present invention, said subsection may comprise a length of 10 to 50% or 20 to 40% of said passage length, particularly about a third.

As to further features and advantages of a corresponding apparatus, reference is made to the explanations above given for the inventive method and embodiments thereof. These likewise apply to a corresponding apparatus, which may be adapted or configured to perform a method according to any embodiment of the present invention.

The present invention and embodiments thereof will now be described with reference to the appended drawings illustrating aspects of the present invention and its embodiments.

### Short description of the Figures

Figure 1 shows an equilibrium line for the para content of hydrogen as a function of temperature illustrating backgrounds of embodiments of the present invention.
Figure 2 schematically illustrates a submerged combustion vaporizer configured according to an embodiment of the present invention.

### Embodiments of the invention

If, below, reference is made to apparatus features, corresponding explanations also apply to method steps and vice versa.

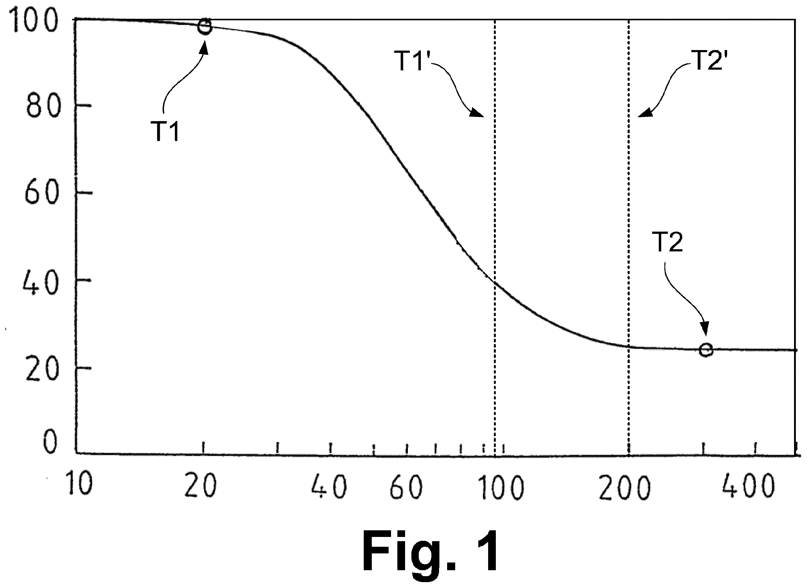

Figure 1 shows an equilibrium line for the para content of hydrogen as a function of temperature illustrating backgrounds of embodiments of the present invention. Figure 1 is, in other words, a diagram wherein, in a logarithmic scale, a temperature in K is indicated on the horizontal axis while a parahydrogen fraction at a corresponding temperature in an equilibrium state is indicated on the vertical axis.

In a method for evaporating liquid hydrogen according to an embodiment of the present invention, liquid hydrogen is heated, at an evaporation pressure level at e.g. 50 to 110 bar, over a temperature range between a first temperature level T1 below the evaporation point of hydrogen at said evaporation pressure level and a second temperature level T2 above the evaporation point of hydrogen at said evaporation pressure level. The first temperature level, in the example shown, may be 20 K and the second temperature level T2, in the example shown, may be 300 K.

As can be seen from Figure 1, at the first temperature level, the equilibrium content of para hydrogen is close to 100% while, at the second temperature level, the equilibrium content of para hydrogen is close to 25%. However, simply heating the hydrogen from the first to the second temperature level will not immediately result in a corresponding conversion as this will depend on catalysts present and conventionally proceeds over several days, resulting in the disadvantages mentioned at the outset.

Therefore, according to embodiments of the present invention, and as mentioned before, at least a part of said hydrogen is contacted with a conversion catalyst promoting conversion from para- to orthohydrogen during said heating at least, or only, in a temperature subrange of said temperature range, said subrange being illustrated with dotted lines in Figure 1 and extending between 95 K and 200 K in the example illustrated, these temperatures being indicated with T1' and T2' in Figure 1. This range may correspond to a specific region of a vaporizer used in embodiments of the present invention, as further illustrated below.

Turning to Figure 2, a submerged combustion vaporizer is shown, which may be used in some embodiments of the present invention. Be it noted that the present invention is neither limited to submerged combustion vaporizers nor, if a submerged combustion vaporizer is used, to the specific type illustrated.

Line 1 is the feed of combustible gas into combustion burner unit 12. Line 2 feeds combustion air into the combustion burner unit 12 and combines with the combustible gas to maintain a flame. Line 3 also provides combustion air to the process and line 4 provides gas for the pilot of the combustion burner unit 12. Cooling water jacket 15 surrounds the combustion burner unit 12 to shield it from the air temperature changes in the water tank 10.

The combustion burner unit 12 provides heat to the aqueous system present in the water tank 10, which in turn heats hydrogen present in a tube bundle 30 vaporizing the hydrogen into gas. Hot combustion gases will enter a distributor duct with sparge tubes 35 where the hot combustion gases will heat the water present in a weir 25.

The heated water will cover the submerged tube bundle 30 where hydrogen is present. Liquid hydrogen is fed into the tube bundle 30 through feed point 5 and after being vaporized in the tube bundle 30 is withdrawn as a hydrogen gas through line 6. The weir 25 is open at the top so that heated water can fall back into the main body of water in the water tank 10 and recirculate upwards through the tube bundle 30.

The injection of the hot combustion gases into the distributor duct with sparge tubes 35 will result in the products of the combustion process (contaminants) to enter the water present in the water tank 10. These combustion products include NO which if left untreated will react with the water and form the higher oxides of nitrogen such as NO₃ and N₂O₅ which will form nitric acid which is corrosive to components in the submerged combustion vaporizer as well as being an environmental concern.

Ozone may therefore, in an embodiment not limiting the scope of the invention, be fed through line 7 and compressor 40 (not always necessary) when valve V1 is open into or around or underneath the distributor duct with sparge tubes 35. There the ozone partially dissolves in water and ozone through aqueous phase or in gas phase enters the frothing two-phase mixture of gas and water that contains many small bubbles. Here, the ozone will react with the nitrogen oxides present as generally known.

After treatment with the ozone, the combustion gases are greatly reduced in nitrogen oxides content and are released from the submerged combustion vaporizer through exhaust stack 20. An external duct or vessel (not shown) may also be used to provide additional residence time and volume to allow ozone to contact the combustion gases and further reduce their content of nitrogen oxides.

In embodiments of the present invention, the tube bundle 30 may, for example in a central third of the whole length as indicated in Figure 2 with positions 31 and 32, be provided with a catalyst promoting conversion from para- to orthohydrogen during heating of the hydrogen in the tube bundle 30, these positions 31 and 32 corresponding e.g. to temperature levels T1' and T2' as illustrated in Figure 1. In other embodiments, these positions may vary and a longer part, or (essentially) the whole length of the tube bundle 30 may be provided with the catalyst promoting conversion from para- to orthohydrogen during said heating.

## Claims

1. A method for evaporating liquid hydrogen, said method comprising heating said liquid hydrogen at an evaporation pressure level over an temperature range between a first temperature level below the evaporation point of hydrogen at said evaporation pressure level and a second temperature level above the evaporation point of hydrogen at said evaporation pressure level using an vaporizer arrangement (10), wherein at least a part of said hydrogen is contacted with a conversion catalyst promoting conversion from para- to orthohydrogen during said heating at least in a temperature subrange of said temperature range.

2. The method according to claim 1, wherein the first temperature level is below 20 K, wherein the second temperature level is above 250 or above 300 K, wherein the subrange is a subrange between 95 K and 200 or 250 K, and wherein said hydrogen or said part thereof being contacted with the conversion catalyst during said heating is contacted with said catalyst in said temperature subrange but not outside said temperature subrange.

3. The method according to claim 1 or 2, wherein said vaporizer arrangement (10) comprises at least one vaporizer selected from a submerged combustion vaporizer, an open rack vaporizer and an intermediate fluid type vaporizer or a combination of at least two of said vaporizers.

4. The method according to any one of the preceding claims, wherein said conversion catalyst comprises at least one catalyst material selected from Fe₂O3, Ni/SiO₂, Ru/Al₂O₃, and combinations thereof.

5. The method according to any one of the preceding claims, wherein the conversion catalyst is provided such that said conversion from para- to orthohydrogen during said heating results in a parahydrogen content of less than 30%.

6. The method according to any one of the preceding claims, wherein the evaporated liquid hydrogen is supplied to at least one of a pipeline, a distribution grid and a directly reduced iron process or a combination thereof.

7. An apparatus for evaporating liquid hydrogen, said apparatus comprising a vaporizer arrangement (10) configured to heat said liquid hydrogen at an evaporation pressure level over an temperature range between a first temperature level below the evaporation point of hydrogen at said evaporation pressure level and a second temperature level above the evaporation point of hydrogen at said evaporation pressure level, wherein said vaporizer arrangement (10) is configured to contact at least a part of said hydrogen with a conversion catalyst promoting conversion from para- to orthohydrogen during said heating at least in a temperature subrange of said temperature range.

8. The apparatus according to claim 7, wherein said vaporizer arrangement (10) comprises heating passages having a passage length, wherein at least a part of said passage length is provided with said conversion catalyst.

9. The apparatus according to claim 8, wherein said conversion catalyst is provided in a subsection of said passage length but not in a remainder thereof.

10. The apparatus according to claim 9, wherein said subsection extends from a first position (31) to a second position (32), said first and second positions (31, 32) being at two sides of a centre of said passage length.

11. The apparatus according to claim 9 or 10 wherein said subsection comprises a length of 10 to 50% or 20 to 40% of said passage length.
